# EUROPEAN PATENT APPLICATION

(11) **EP 1 803 550 A2**
(43) Date of publication of application: **04.07.2007**
(21) Application number: 06127205.0
(22) Date of filing: 27.12.2006
(51) Int. Cl.: B31D 3/02, B32B 3/12

(54) **Method to make an internal element of a double or multi-layer panel, and internal element thus made**

(30) Priority: 02.01.2006 IT UD20060002
(71) Applicant: FANTONI SpA, 33010 OSOPPO (UD) (IT)
(72) Inventor: Fantoni, Giovanni, 33013, Gemona del Friuli (UD) (IT)
(74) Representative: Petraz, Gilberto Luigi

(57) **Abstract**

Internal element (10) of a double panel (12), comprising a determinate filling material with which layers are made, each having a supporting surface. The internal element (10) comprises at least two stratified portions, each of which consists of a determinate number of layers glued one above the other with respect to the supporting surfaces, has a determinate thickness and defines two extended surfaces (29) substantially orthogonal to the supporting surfaces and distanced from each other by the determinate thickness. The internal element (10) also comprises at least a lateral edge (30), with respect to which the supporting surfaces form an angle of inclination (γ).

## Description

### FIELD OF THE INVENTION

The present invention concerns a method to make an internal element of a double or multi-layer panel, used for making furnishing elements such as for example doors or shelves, and the internal element thus obtained. To be more exact, the internal element according to the present invention is made with a determinate filling material, comprising for example paper, cardboard, plastic materials, derivatives of wood or metals.

### BACKGROUND OF THE INVENTION

In the furnishing sector it is known to make double panels comprising two outer covering layers, possibly enhanced, made for example of solid wood, plywood, panels of particles, MDF or plastic material, and an internal element, made of a lighter filling material, such as for example cardboard.

Internal elements formed by several layers are very common, because they are limited in cost; each is made of undulated strips of cardboard, glued to one or more sheets of cardboard which function as a supporting surface, or in a honeycomb.

In the case of undulated strips, the layers are glued one on top of the other so that the supporting surfaces are parallel to each other, so as thus to make a stratified structure with an overall height defined by the number of layers and the thickness of each layer.

The stratified structure is then cut in a direction orthogonal to the undulations of the cardboard in order to obtain the internal element with a desired thickness.

One disadvantage of internal elements made with the known method is that the sizes are correlated to the overall thickness of the layers, so that if said thickness is, for example, 500 mm, one of the sides of each internal element will be 500 mm.

The internal element, made according to the known method described above, also has a mechanical resistance that is not uniform over its perimeter, since the edges perpendicular to the undulations have lower resistance than that of the edges parallel to the undulations.

To be more exact, known internal elements have a relatively low mechanical resistance in response to forces applied parallel to the sides of the element.

Purpose of the present invention is to perfect a method which allows to make, with a very low quantity of working scrap, an internal element of a double panel, whose sizes are not limited to those of the individual layers of which it is composed, and which has, given the same material used, good characteristics of mechanical resistance.

The Applicant has devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe other characteristics of the invention or variants to the main inventive idea.

In accordance with the above purposes, a method according to the present invention is able to be used to make an internal element for a double panel, using a determinate filling material, such as for example paper, cardboard, plastic materials, derivatives of wood or metals.

The method according to the present invention comprises at least:
- a first phase, in which layers are made with the filling material, each of which having a supporting surface; and
- a second phase, in which a determinate number "n" of layers is glued one on top of the other so that the supporting surfaces are substantially parallel to each other.

According to a characteristic of the present invention, during the second phase, the layers are staggered with respect to each other along the planes of the supporting surfaces in order to achieve a stratified structure, having a substantially oblique parallelepiped shape.

The stratified structure has two first faces substantially parallel to the supporting surfaces; two second faces substantially orthogonal to the two first faces; and two third faces, stepped, defined by the staggering of said layers.

The two third faces define a plane inclined by a determinate angle "α" with respect to a base face of said first faces.

The method according to the present invention also comprises the following phases:
- a third phase, in which the stratified structure is cut along a cutting plane substantially orthogonal to the first faces and substantially parallel to the second faces so as to define at least a stratified portion, or semi-worked piece;
- a fourth phase, in which the stratified portion is put adjacent to at least another analogous stratified portion, and in which the respective contact edges of the stratified portions are glued to each other, so as to obtain a continuous strip of stratified portions, having laterally a substantially continuous development of said steps; and
- a fifth phase, in which the strip is cut to size, to define the internal element.

Thanks to the continuous strip and its cutting to size, the invention allows to obtain internal elements having the desired sizes substantially irrespective of the sizes of the stratified portions and hence of the layers.

Advantageously, the stratified portions are glued to each other at least along the contact edges obtained from the first faces, so that said edges form an angle "β" with respect to an axis "X" which is substantially parallel to the longitudinal axis of the strip thus made.

In this way, given that the join lines between the stratified portions and the supporting surfaces are inclined with respect to the lateral edges of the internal element according to the present invention, the latter has good mechanical resistance especially with respect to forces applied in a direction parallel to the outer edges of the element.

In the event that the determinate angle "α" coincides with the angle "β", that is, the stepped sides of the strip have substantially parallel developments with respect to each other, it is possible to use the width of the strip almost completely to obtain the internal elements, keeping working scraps very low, almost eliminating them.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view, partly sectioned, of a double panel having an internal element according to the present invention;
- fig. 2 is a lateral view of a stratified structure used to make the internal element in fig. 1 using a method according to the present invention;
- fig. 3 is a plane view of the stratified structure in fig. 2;
- fig. 4 is a lateral view from IV of the stratified structure in fig. 3;
- fig. 5 is a three-dimensional view of the stratified structure in fig. 2;
- fig. 6 is a three-dimensional view of a stratified portion obtained from the stratified structure in fig. 2;
- fig. 7 is a plane view of a strip obtained by gluing to each other several stratified portions in fig. 6;
- fig. 8 is a plane view of the internal element in fig. 1.

### DETAILED DESCRIPTION OF A PREFERENTIAL FORM OF EMBODIMENT

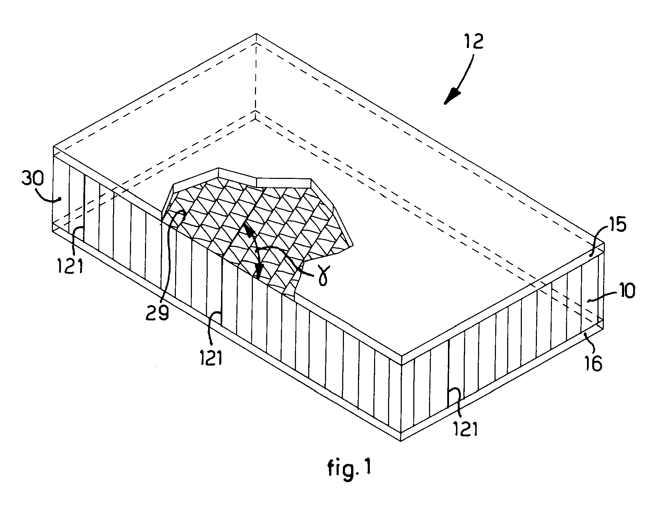

With reference to fig. 1, a method according to the present invention is used to make an internal element 10, or core, of a double panel 12, of the type having two outer coverings, possibly enhanced, respectively first covering 15 and second covering 16.

Each covering 15, 16 has a thickness comprised between about 1 and about 10 mm, advantageously between about 2 and about 3 mm.

The internal element 10 is made according to the phases of a method as shall now be described.

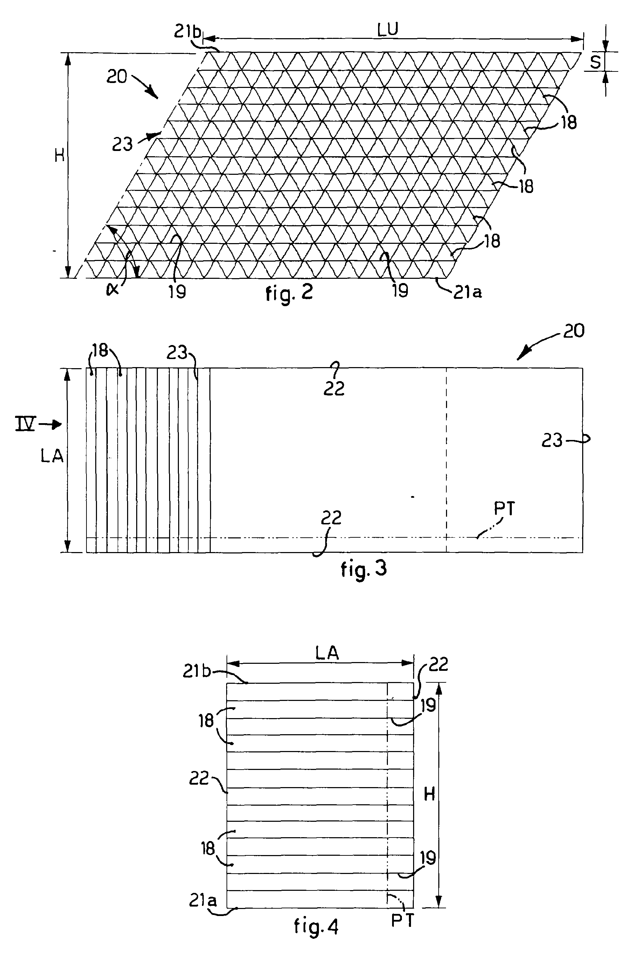

In a first phase, shown in figs. 2 to 5, layers 18 of filling material are made, in a known manner, each comprising undulated strips of cardboard attached to one or more sheets of cardboard that function as a supporting surface 19.

Each layer 18 normally has a width LA for example comprised between about 2000 and about 3000 mm, advantageously about 2400 mm.

Each layer 18 also has a length LU normally comprised between about 1000 mm and about 5000 mm, for example 3000 mm, and a thickness S comprised between about 2 and about 6 mm.

Subsequently, the layers 18 thus obtained are glued one above the other so that the respective supporting surfaces 19 are substantially parallel to each other and are staggered along the planes of the supporting surfaces 19.

A stratified structure 20 is thus achieved with the shape of an oblique parallelepiped, having:
- two first faces 21a, 21b, substantially parallel to the supporting surfaces 19;
- two second faces 22, substantially orthogonal to the two first faces 21a, 21b; and
- two third faces 23 with steps defined by the staggering of the layers 18 and defining a plane inclined, with respect to the first base face 21a, by a determinate angle α comprised between about 30° and about 60°, in the case shown here, 60°.

The stratified structure 20 has an overall thickness H (where H = n·S, with n the overall number of overlapping layers 18) of about 150 mm.

In a second phase of the method, the stratified structure 20 is cut along a cutting plane PT substantially orthogonal to the first faces 21a, 21b and parallel to the second faces 22, to thus obtain a stratified portion or semi-worked piece 25.

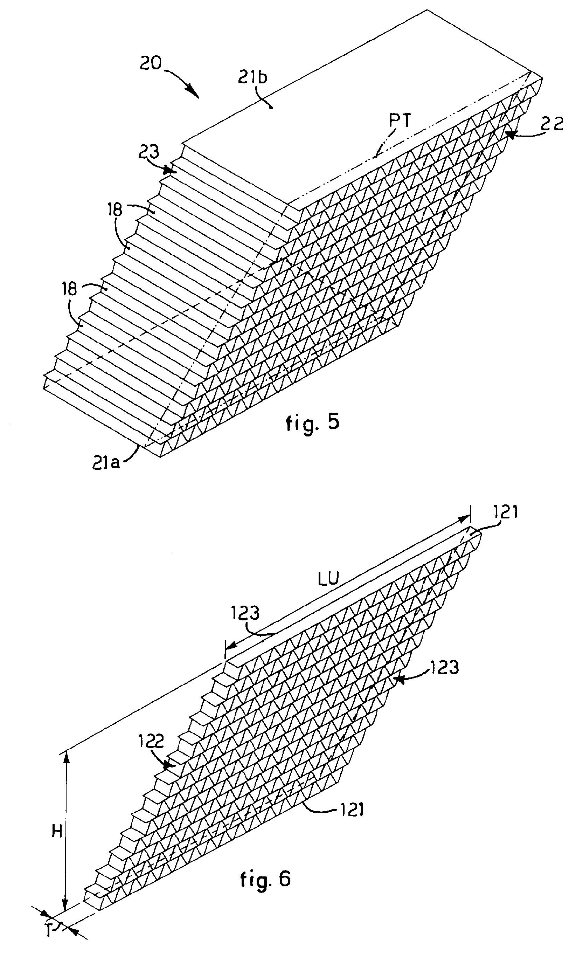

The semi-worked piece 25 (fig. 6) thus obtained is shaped like an oblique parallelepiped having two first sides 121, substantially parallel to each other, and two second sides 122 with steps defining a plane inclined by an angle α with respect to the first base side 121 derived, in turn, from the first base face 21a.

The semi-worked piece 25 also comprises two bigger surfaces 123, with shape and size equal to those of the two second faces 22, and thus consisting of n layers 18.

The semi-worked piece 25 has a width equal to the overall thickness H of the stratified structure 20, while its first sides 121 have a length equal to the length LU of a layer 18, and a thickness T defined during the cutting and normally comprised between about 12 and about 60 mm.

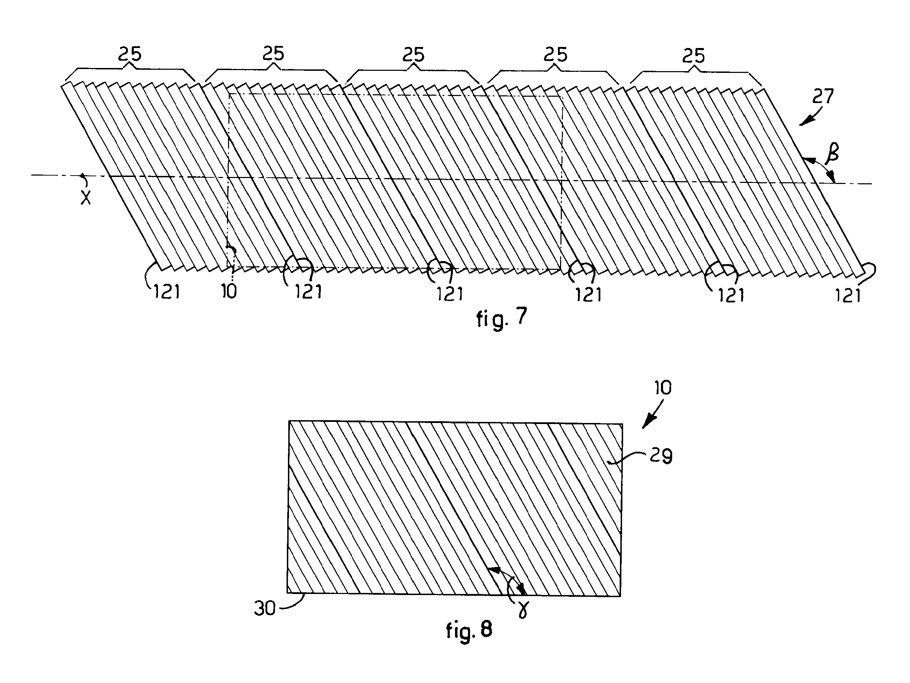

In a fourth phase, the semi-worked pieces 25 thus obtained are disposed side by side (fig. 7) along the first sides 121, so as to dispose the second sides 122 aligned with each other and substantially parallel to an axis X.

The semi-worked pieces 25 are then glued to each other along the first sides 121 to obtain a continuous strip 27 of semi-worked pieces 25 having laterally a substantially continuous development of the steps.

The steps of each outer side of the strip 27 define two respective planes substantially parallel to each other, and the first sides 121 form with the axis X an angle β substantially equal to the angle α, that is, comprised between about 30° and about 60°.

One solution of the invention, not shown here, provides to put the semi-worked pieces 25 adjacent to each other and glue them along the second sides 122 too, disposing the steps in reciprocal contact, so as to increase as desired the width of the strip 27.

In a fifth phase, the strip 27 is cut to size to obtain the internal element 10 with the desired sizes and, for example, a rectangular shape.

The internal element 10 (fig. 8) made according to the present invention therefore comprises at least two semi-worked pieces 25, each of which is provided with a determinate number of layers 18 glued one above the other along the supporting surfaces 19, has a thickness T and defines two extended surfaces substantially orthogonal to the supporting surfaces 19 and distanced from each other by said thickness T.

The internal element 10 comprises at least a lateral edge 30 of a thickness T, with respect to which the supporting surfaces 19 form an angle of inclination γ which is substantially equal to the angle β, if the strip 27 is cut along cutting planes parallel to its stepped outer sides.

In general, the angle of inclination γ is comprised between about 30° and about 60°.

Thanks to the invention, the internal element 10 guarantees good mechanical resistance specially with respect to forces applied in a direction parallel to the outer sides of the element 10.

Finally, the two coverings 15 and 16 are glued in a known manner to the internal element 10 in order to define the double panel 12, which thus has an overall thickness comprised between about 15 and about 100 mm.

It is clear that modifications and/or additions of parts and/or phases may be made to the internal element 10 and the method to make it as described heretofore, without departing from the scope of the present invention.

For example, if honeycomb filling material is used, it is disposed inclined with an angle comprised between 30° and 60°, advantageously 45° with respect to the longitudinal axis of the strip 27.

This solution, which is not shown in the drawings, has the advantage that it makes uniform the resistance to lateral compression on the perimeter of the panel.

It is also clear that, although the present invention has been described with reference to some specific examples, a person of skill in the art shall certainly be able to achieve many other equivalent forms of method to make internal elements of double or multi-layer panels and internal elements thus made, having the characteristics as set forth in the claims and hence all coming within the field of protection defined thereby.

## Claims

1. Method to make an internal element of a double panel (12), using a determinate filling material, comprising at least a first phase in which layers (18) are made with said filling material, each having a supporting surface (19); and a second phase, in which a determinate number (n) of said layers (18) is glued one above the other so that said supporting surfaces (19) are substantially parallel to each other, **characterized in that** during said second phase said layers (18) are staggered with respect to each other along the planes of said supporting surfaces (19) in order to achieve a stratified structure (20), having two first faces (21a, 21b) substantially parallel to said supporting surfaces (19); two second faces (22) substantially orthogonal to said two first faces (21a, 21b); and two third faces (23) with steps defined by the staggering of said layers (18), and **in that** it also comprises the following phases:
- a third phase, in which said stratified structure (20) is cut along a cutting plane (PT) substantially orthogonal to said first faces (21a, 21b) and substantially parallel to said second faces (22) so as to define at least a stratified portion (25);
- a fourth phase, in which said stratified portion (25) is put adjacent to at least an analogous stratified portion (25), and in which respective contact edges (121, 122) of said stratified portions (25) are glued to each other, so as to obtain a continuous strip (27) of said stratified portions (25) and having laterally a substantially continuous development of said steps; and
- a fifth phase, in which said strip (27) is cut to size, to define said internal element (10).

2. Method as in claim 1, **characterized in that** during said second phase, said stratified portions (25) are glued to each other so that the contact edges (121) obtained from said first faces (21a, 21b) form an angle (β) with respect to an axis (X) substantially parallel to the longitudinal axis of said strip (27).

3. Method as in claim 2, **characterized in that** said angle (β) is comprised between about 30° and about 60°.

4. Method as in claim 2 or 3, **characterized in that** during said fourth phase, said stratified portions (25) are glued to each other so that the steps of each outer side of said strip (27) define two respective planes substantially parallel to each other.

5. Method as in any claim hereinbefore, **characterized in that** said two third faces (23) define a plane inclined by a determinate angle (α) with respect to a base face (21a) of said first faces (21a, 21b).

6. Method as in claim 5, **characterized in that** said determinate angle (α) is comprised between about 30° and about 60°.

7. Method as in claims 2 and 5, **characterized in that** said angle (β) is substantially equal to said determinate angle (α).

8. Method as in any claim hereinbefore, **characterized in that** said determinate filling material comprises paper, cardboard, plastic materials, derivatives of wood or metals.

9. Method as in claim 8, **characterized in that** said cardboard is disposed in undulated strips.

10. Method as in any claim from 1 to 8, **characterized in that** said filling material is disposed in a honeycomb inclined with an angle comprised between about 30° and about 60° with respect to the longitudinal axis of said strip (27).

11. Internal element of a double panel (12), comprising a determinate filling material with which layers (18) are made, each having a supporting surface (19), **characterized in that** it comprises at least two stratified portions (25), each of which consists of a determinate number of said layers (18) glued one above the other with respect to said supporting surfaces (19), has a determinate thickness (T) and defines two extended surfaces (29) substantially orthogonal to said supporting surfaces (19) and distanced from each other by said determinate thickness (T), wherein said internal element (10) comprises at least a lateral edge (30), with respect to which said supporting surfaces (19) form an angle of inclination (γ).

12. Element as in claim 10, **characterized in that** said angle of inclination (γ) is comprised between about 30° and about 60°.
